# EUROPÄISCHE PATENTSCHRIFT

(11) **EP 3 774 496 B1**
(45) Veröffentlichungstag und Bekanntmachung des Hinweises auf die Patenterteilung: **02.08.2023**
(21) Anmeldenummer: 19716321.5
(22) Anmeldetag: 27.03.2019
(51) Int. Cl.: B62D 1/19, B62D 1/181

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 28.03.2018 DE 102018204735
(43) Veröffentlichungstag der Anmeldung: 17.02.2021
(73) Patentinhaber: thyssenkrupp Presta AG, 9492 Eschen (LI); thyssenkrupp AG, 45143 Essen (DE)
(72) Erfinder: SCHMIDT, René, 9464 Lienz (CH)
(74) Vertreter: thyssenkrupp Intellectual Property GmbH
(86) Internationale Anmeldenummer: PCT/EP2019/057708
(87) Internationale Veröffentlichungsnummer: WO 2019/185704

(56) Entgegenhaltungen:
- DE-A1-102016 214 709
- US-A1- 2016 046 318

## Beschreibung

### Stand der Technik

Die Erfindung betrifft eine Lenksäule für ein Kraftfahrzeug, umfassend ein Innenmantelrohr, in dem eine Lenkspindel um ihre Längsachse drehbar gelagert ist, eine Außenmanteleinheit, in der das innere Mantelrohr gehaltert ist, und die mit der Karosserie eines Kraftfahrzeugs direkt oder indirekt verbindbar ist, wobei zwischen der Außenmanteleinheit und dem Innenmantelrohr ein motorischer Verstellantrieb angeordnet ist, durch dem die Außenmanteleinheit und das Innenmantelrohr relativ zueinander in Richtung der Längsachse verschiebbar sind, wobei das Innenmantelrohr und die Außenmanteleinheit über eine Energieabsorptionseinrichtung gekoppelt sind, die zumindest zwei Energieabsorptionselemente und eine Koppelvorrichtung aufweist, wobei über die Koppelvorrichtung zumindest ein erstes Energieabsorptionselement zwischen dem Innenmantelrohr und der Außenmanteleinheit einkoppelbar oder auskoppelbar ist, welches in eingekoppeltem Zustand bei einer relativen Verschiebung in Längsrichtung von Innenmantelrohr und Außenmanteleinheit plastisch verformbar ist, und die Koppelvorrichtung ein Koppelelement aufweist, welches zwischen dem ausgekoppelten und dem eingekoppelten Zustand bewegbar ist, wobei das Koppelelement in Wirkeingriff bringbar ist mit einem Koppelstück welches mit dem ersten Energieabsorptionselement verbunden ist, wobei der der Verstellantrieb zwischen der Energieabsorptionseinrichtung und der Außenmanteleinheit angeordnet ist. Eine derartige Lenksäule ist aus der US 2016/046318 A1 bekannt.

Zur Anpassung der Lenkradposition an die Sitzposition des Fahrers eines Kraftfahrzeugs sind derartige Lenksäulen in unterschiedlichen Ausführungsformen im Stand der Technik bekannt. Das am hinteren Ende der Lenkspindel angebrachte Lenkrad kann bei gattungsgemäßen Lenksäulen durch eine Längenverstellung in Richtung der Lenkspindel-Längsachse in Längsrichtung im Fahrzeuginnenraum positioniert werden.

Die Längenverstellbarkeit wird dadurch realisiert, dass das Innenmantelrohr, auch als inneres Mantelrohr oder kurz Mantelrohr bezeichnet, in dem die Lenkspindel drehbar gelagert ist, relativ zur Außenmanteleinheit, auch als äußere Manteleinheit oder kurz Manteleinheit bezeichnet, in Richtung der Längsachse, d.h. in Längsrichtung teleskopartig verstellbar ist.

Als wirksame Maßnahme zur Verbesserung der Insassensicherheit bei einem Fahrzeugzusammenstoß, dem sogenannten Crashfall, bei dem der Fahrer mit hoher Geschwindigkeit auf das Lenkrad aufprallt, ist es bekannt, die Lenksäule in Längsrichtung zusammenschiebbar zu gestalten, wenn eine Kraft auf das Lenkrad ausgeübt wird, die einen nur im Crashfall auftretenden Grenzwert überschreitet. Um für eine kontrollierte Abbremsung eines auf das Lenkrad auftreffenden Körpers zu sorgen, ist zwischen der Außenmanteleinheit und dem Innenmantelrohr eine Energieabsorptionseinrichtung eingekoppelt. Diese setzt die eingeleitete kinetische Energie in plastische Verformung eines oder mehrerer Energieabsorptionselemente um, beispielsweise durch Aufreißen einer Reißlasche oder Verbiegen eines langgestreckten Biegeelements, etwa eines Biegedrahts oder Biegestreifens.

Eine gattungsgemäße Lenksäule ist in der US 9616914 B2 beschrieben. Darin wird vorgeschlagen, die Bremswirkung der Energieabsorptionseinrichtung steuerbar zu gestalten, um im Crashfall zu berücksichtigen, ob der Fahrer angegurtet ist oder nicht, oder eine Anpassung an Parameter wie Fahrergewicht, Abstand vom Lenkrad und dergleichen vornehmen zu können. Im Einzelnen sind mindestens zwei Energieabsorptionselemente in Form von Biegestreifen vorgesehen, die bei Bedarf dadurch aktiviert werden können, dass sie zwischen der äußeren Manteleinheit und dem inneren Mantelrohr eingekoppelt werden, indem sie durch eine Koppelvorrichtung in mechanische Wirkverbindung zwischen dem Eingriffsteil und dem inneren Mantelrohr gebracht werden. Zur Kopplung mit dem Energieabsorptionselement weist die Koppeleinrichtung ein Mitnehmerelement auf, welches mit einem ersten Energieabsorptionselement in Wirkeingriff bringbar ist. Die Koppelvorrichtung kann geschaltet werden, um dieses Energieabsorptionselement wahlweise zwischen dem Innenmantelrohr und der Außenmanteleinheit ein- oder auszukoppeln. Auf diese Weise kann eine umschaltbare, individuell an den jeweiligen Bedarfsfall angepasste Bremscharakteristik, d.h. ein angepasstes Crashniveau bzw. Crashlevel realisiert werden.

Bei der bekannten Energieabsorptionseinrichtung ist vorgesehen, dass das Mitnehmerelement der Koppeleinrichtung, einem pyroelektrischen Aktuator oder Pyroswitch, an dem ersten Energieabsorptionselement, einem Biegestreifen, unmittelbar mechanisch angreift. Nachteilig daran ist, dass beim Umschalten eine undefinierte Kraft quer zur Verformungsrichtung, der Längsrichtung, auf das Energieabsorptionselement ausgeübt werden kann. Außerdem wird beim Auskoppeln das dann ausgekoppelte Energieabsorptionselement nicht mehr vom ausgekoppelten Mitnehmerelement gehalten, und befindet sich in einem losen, räumlich undefinierten Zustand zwischen Innenmantelrohr und Außenmanteleinheit, wodurch im Crashfall unkontrollierte Reibung und Deformationen auftreten können, was zu einer Beeinträchtigung der Energieabsorptionscharakteristik führen kann.

Angesichts der vorangehend erläuterten Problematik ist es eine Aufgabe der vorliegenden Erfindung, eine Lenksäule mit einem Verstellantrieb mit einer verbesserten schaltbaren Energieabsorptionseinrichtung zur Verfügung zu stellen, welche eine erhöhte Zuverlässigkeit bei jedem eingeschalteten Energieabsorptionsniveau ermöglicht.

### Darstellung der Erfindung

Diese Aufgabe wird erfindungsgemäß gelöst durch eine Lenksäule mit den Merkmalen des Anspruchs 1. Vorteilhafte Weiterbildungen ergeben sich aus den Unteransprüchen.

Erfindungsgemäß ist bei einer Lenksäule der eingangs genannten Art vorgesehen, dass das Koppelstück als von dem Energieabsorptionselement separates Zwischenelement ausgeführt ist.

Das Koppelstück bildet ein separat von dem Energieabsorptionselement ausgebildetes Kupplungselement, mit dem das Koppelelement der Koppelvorrichtung zusammenwirkt. In eingeschaltetem Zustand greift das Koppelement in das Koppelstück ein und sorgt so dafür, dass das Koppelstück in Längsrichtung an der Außenmanteleinheit abgestützt ist. Dadurch, dass das Koppelstück mit dem Energieabsorptionselement verbunden ist, bildet es ein zwischen dem Energieabsorptionselement und der Koppeleinrichtung eingegliedertes Kraftübertragungselement, d.h. eine Art Zwischenelement, über das im Crashfall der Kraftfluß von der Außenmanteleinheit in Energieabsorptionselement bewirkt wird.

Zum Deaktivieren des Energieabsorptionselements wird von der Koppeleinrichtung das Koppelelement bewegt, so dass es aus dem Wirkeingriff mit dem Koppelstück ausgekoppelt wird, und der Kraftfluß zwischen Außenmanteleinheit und Energieabsorptionselement unterbrochen ist. Erfindungsgemäß verbleibt dabei das Koppelstück im Eingriff mit dem Energieabsorptionselement.

Das Koppelstück bildet ein von dem Energieabsorptionselement separates, zusätzliches Zwischenelement, welches zur Krafteinleitung dient, aber im Crashfall nicht zur Energieabsorption deformiert wird, und insbesondere beim Auskoppeln weiterhin mit dem Energieabsorptionselement verbunden bleibt. Das Koppelement ist nicht wie im Stand der Technik unmittelbar in direktem Kontakt mit dem Energieabsorptionselement, sondern mittelbar über das Koppelstück. Beim Ein- oder Auskoppeln wird das Koppelelement in oder außer Kontakt mit dem Koppelstück gebracht, so dass keine direkte, potentiell nachteilige Wechselwirkung zwischen dem Koppelelement und dem Energieabsorptionselement auftritt.

Dadurch, dass das Koppelstück separat von dem Energieabsorptionselement ausgeführt ist, kann eine Anpassung an unterschiedliche bauliche Gegebenheiten erfolgen, beispielsweise an unterschiedlich geformte Koppelelemente, und zusätzlich oder alternativ an unterschiedlich ausgebildete Energieabsorptionselemente. Der Eingriff der Koppeleinrichtung kann hinsichtlich Lage und Abstand zwischen Außenmanteleinheit und Energieabsorptionselement durch eine entsprechende Gestaltung des Koppelstücks als Zwischenelement zur Kraftübertragung angepasst werden. Dadurch ist eine flexible Verwendung einer Kopplungseinrichtung und/oder von Energieabsorptionselementen an unterschiedlichen Bauformen von Lenksäulen einfacher realisierbar.

Darüber hinaus kann das erfindungsgemäße Koppelstück an der Außenmanteleinheit abgestützt sein, um beim Ein- oder Auskoppeln vom Koppelelement potentiell ausgeübte Querkräfte abzufangen, um das Energieabsorptionselement von potentiell funktionsbeeinträchtigenden Belastungen zu entkoppeln. Außerdem kann das Koppelstück relativ zur Außenmanteleinheit geführt werden, so dass es im ausgekoppelten Zustand dafür sorgt, dass das dann freie Ende des Energieabsorptionselements auf einer vorgegebenen Bahn kontrolliert entlanggeführt werden kann. Dadurch wird unkontrollierte Reibung und Verformung im Crashfall vermieden, wodurch die Funktions- und Betriebssicherheit erhöht wird.

Zur Abstützung und Führung kann das erfindungsgemäße Koppelstück in Form und Abmessungen weitgehend frei gestaltet werden, um das Ein- und Auskoppeln des Koppelements zu optimieren, und potentiell schädliche Einflüsse vom Energieabsorptionselement abzuhalten. Dadurch werden die Einsatzmöglichkeiten erweitert, und der erforderliche Aufwand bei der Entwicklung und Fertigung von Lenksäulen in vorteilhafter Weise reduziert.

Zwischen der Außenmanteleinheit und dem Innenmantelrohr ist der motorische Verstellantrieb angebracht, von dem die Außenmanteleinheit und das Innenmantelrohr relativ zueinander in Richtung der Längsachse verschiebbar sind. Der motorische Verstellantrieb, beispielsweise ein Rotations- oder Tauchspindelantrieb wie nachfolgend noch beschrieben ist, stützt sich in Längsrichtung an dem Außenmantel ab und greift mit einem in Längsrichtung motorisch verstellbaren Stellelement am Innenmantelrohr an.

Das Innenmantelrohr und die Außenmanteleinheit sind über eine Energieabsorptionseinrichtung gekoppelt, wobei darunter zu verstehen ist, dass die Energieabsorptionseinrichtung im Kraftfluss zwischen Innenmantelrohr und Außenmanteleinheit angeordnet ist, bezüglich einer in Richtung der Längsachse wirkenden Kraft. Dabei kann zwischen der Energieabsorptionseinrichtung und dem Innenmantelrohr bzw. zwischen der Energieabsorptionseinrichtung und der Außenmanteleinheit ein oder mehrere Zwischenelemente vorgesehen sein. Somit kann es in einer vorteilhaften Weiterbildung vorgesehen sein, dass der Verstellantrieb zwischen der Energieabsorptionseinrichtung und der Außenmanteleinheit angeordnet ist. Der Verstellantrieb und die Energieabsorptionseinrichtung sind somit in Reihe bzgl. des Kraftflusses zwischen dem Innenmantelrohr und der Außenmanteleinheit angeordnet.

Das Koppelstück kann ein Mitnehmerelement aufweisen, welches in das erste Energieabsorptionselement eingreift. Über das Mitnehmerelement ist das Koppelstück mit dem ersten Energieabsorptionselement verbunden. Bevorzugt ist das Mitnehmerelement als Formschlusselement ausgebildet, welches formschlüssig bezüglich einer Relativbewegung in Längsrichtung in das Energieabsorptionselement eingreift. Zur Verwendung unterschiedlicher Ausführungen kann das Mitnehmerelement an die Befestigungsmittel des jeweiligen Energieabsorptionselements angepasst werden.

Es ist vorteilhaft, dass das Koppelstück in einer Führungseinrichtung in Richtung der Längsachse geführt ist. In der Führungseinrichtung ist zusammen mit dem Koppelelement das damit verbundene Energieabsorptionselement in Längsrichtung relativ zur äußeren Manteleinheit geführt, wenn die Koppelvorrichtung sich in ausgekoppeltem Zustand befindet. Dadurch wird das freie Ende des Energieabsorptionselements, in das beispielsweise ein Mitnehmerelement des Koppelstücks formschlüssig eingreift, auch im ausgekoppelten Zustand im Crashfall relativ zur äußeren Manteleinheit kontrolliert bewegt.

Eine vorgenannte Führungseinrichtung kann vorteilhaft dadurch realisiert sein, dass das Koppelstück einen Führungskörper umfasst, der in einer Führungsnut aufgenommen ist. Der Führungskörper ist dabei in Längsrichtung verschiebbar relativ zur Außenmanteleinheit geführt. Die Führungsnut kann in einem mit der Außenmanteleinheit verbundenen Element realisiert sein, und sich beispielsweise linear in Längsrichtung erstrecken. Der Führungskörper kann als Gleitstein ausgebildet sein, der im Crashfall bei ausgekoppeltem Energieabsorptionselement in der Führungsnut entlanggleiten kann. Eine derartige Zwangsführung kann mit geringem Aufwand, kompakt und mit zuverlässiger Funktion realisiert werden.

In einer vorteilhaften Weiterbildung weist die Führungsnut einen Abschnitt mit reduzierter Nutbreite auf, wobei das Koppelstück eine Breite aufweist, die größer ist als die Nutbreite in dem Abschnitt mit reduzierter Nutbreite, wobei die Breite des Koppelstücks geringer ist als die Nutbreite der Führungsnut ausserhalb des Abschnitts mit reduzierter Nutbreite. Das Koppelstück ist in diesem Abschnitt mit der reduzierten Nutbreite kraftschlüssig in der Führungsnut eingesetzt, wobei im Crashfall bei ausgekoppeltem Energieabsorptionselement das Koppelstück unter Überwindung einer vorbestimmten Lösekraft aus dem Abschnitt der Führungsnut mit reduzierter Nutbreite herausbewegt wird und dann in der Führungsnut unter Spiel entlanggleiten kann.

Das Koppelstück kann eine Kopplungsaufnahme aufweisen, mit der das Koppelelement verbindbar ist. In eingeschaltetem Zustand greift das Koppelelement in die Kopplungsaufnahme ein, so dass eine Verbindung zur Kraftübertragung von der Koppelvorrichtung über das Koppelstück auf das Energieabsorptionselement erzeugt wird. Im ausgekoppelten Zustand wird das Koppelelement aus der Kopplungsaufnahme entfernt und die Kraftübertragung unterbrochen, so dass sich das Koppelstück im Crashfall relativ zur Koppelvorrichtung bewegen kann. Die Kopplungsaufnahme kann beispielsweise als quer zur Längsachse angeordnete Koppelöffnung ausgebildet sein, in die ein beispielsweise als Koppelbolzen ausgebildetes Koppelelement formschlüssig eingreifen kann. Zum Auskoppeln wird der Koppelbolzen von der Koppelvorrichtung einfach aus der Koppelöffnung herausgezogen.

Eine vorteilhafte Ausführung der Erfindung sieht vor, dass die Energieabsorptionseinrichtung ein Sollbruchelement aufweist. Über das Sollbruchelement ist bezüglich der Kraftübertragung im Crashfall parallel zu den Energieabsorptionselementen angeordnet und sorgt dafür, dass die im Normalbetrieb auftretenden Kräfte zwischen Außenmanteleinheit und Innenmantelrohr aufgenommen werden, und dadurch nicht auf die Energieabsorptionselemente einwirken. Nur bei Überschreitung einer vorgegebenen Grenzkraft, die im Crashfall auftritt, bricht das Sollbruchelement und gibt die relative Bewegung zur Verformung des oder der Energieabsorptionselemente frei. Das Sollbruchelement kann beispielsweise als Scherstift, Niet oder als Schraube ausgebildet sein, der quer zur Längsachse bevorzugt formschlüssig zwischen Außenmanteleinheit und Innenmantelrohr eingesetzt und abgestützt ist.

Eine vorteilhafte Ausführung der Erfindung sieht vor, dass eine Trägerplatte mit der Außenmanteleinheit gekoppelt ist. Die Trägerplatte bildet ein Trägerteil, welches sich in Längsrichtung an der Außenmanteleinheit abstützt. Zwischen der Trägerplatte und der Außenmanteleinheit kann der Verstellantrieb zur Längsverstellung der Lenksäule angeordnet sein. An der Trägerplatte kann eine Spindelmutter drehfest bzgl. einer Rotation um die Spindelachse in Längsrichtung abgestützt sein, in die eine von einem motorischen Spindelantrieb um ihre Spindelachse drehend antreibbare Gewindespindel eingreift. In einer bevorzugten Ausführungsform kann es vorgesehen sein, dass die Spindelmutter drehfest bzgl. einer Rotation um Spindelachse an einem Tragelement gehalten ist, welches mit der Trägerplatte gekoppelt, sprich an dieser befestigt ist. Der Spindelantrieb dieses als Rotationsspindelantriebs bezeichneten Verstellantriebs stützt sich in Längsrichtung an der Außenmanteleinheit ab, so dass eine relative Drehung von Gewindespindel und Spindelmutter eine teleskopierende Verschiebung des Innenmantelrohrs relativ zur Außenmanteleinheit bewirkt zur Längsverstellung der Lenksäule.

Alternativ kann ein Verstellantrieb als Tauchspindelantrieb realisiert sein, einer Bauform eines Spindeltriebs, bei dem sich die Gewindespindel drehfest in Längsrichtung zwischen Innenmantelrohr und Außenmanteleinheit abstützt, und die Spindelmutter motorisch drehend antreibbar ist. Dabei ist die Gewindespindel mit der Trägerplatte gekoppelt.

Die Trägerplatte kann die Führungseinrichtung aufweisen. Die weiter oben erläuterte Führungseinrichtung zur Führung des Koppelstücks in Richtung der Längsachse kann in der Trägerplatte beispielsweise als in Längsrichtung verlaufenden Führungsnut ausgebildet sein, in der ein Führungskörper des Koppelstücks gleitend verschiebbar gelagert ist.

An der Trägerplatte kann der mit dem zweiten Energieabsorptionselement verbundene Mitnehmer festgelegt sein. Über den Mitnehmer kann das zweite Energieabsorptionselement, welches nicht schaltbar ist, dauerhaft über die Trägerplatte zwischen der Außenmanteleinheit und dem Innenmantelrohr eingekoppelt sein. Der Mitnehmer kann beispielsweise durch ein formschlüssig in die Trägerplatte und das Energieabsorptionselement eingreifendes Verbindungselement gebildet werden. Das Verbindungselement kann als Zapfen ausgebildet sein.

Die Trägerplatte ist bevorzugt als Gussbauteil ausgebildet. Besonders bevorzugt ist die Trägerplatte aus einer Aluminiumlegierung gebildet.

Die Trägerplatte kann über das Sollbruchelement mit dem Innenmantelrohr verbunden sein. Das bezüglich seiner Funktion vorangehend beschriebene Sollbruchelement kann beispielsweise als Scherstift oder Scherniet ausgebildet sein, der quer zur Längsachse bevorzugt formschlüssig zwischen der Trägerplatte und dem Innenmantelrohr eingesetzt sein, so dass im Crashfall eine Relativbewegung zwischen Außenmanteleinheit und Innenmantelrohr bei Überschreiten einer Grenzkraft freigegeben wird. Die Abstützung des Sollbruchelements an der Trägerplatte ist funktional und montagefreundlich.

Die Koppelvorrichtung kann bevorzugt an der Trägerplatte festgelegt sein. Ein Pyroswitch einer Koppelvorrichtung, dessen Funktion vorangehend erläutert ist, kann an der Trägerplatte montiert sein, wobei das bewegbare Koppelement, beispielsweise ein quer zur Längsachse bewegbarer Koppelbolzen, wahlweise in oder außer Eingriff mit dem erfindungsgemäßen Koppelelement gebracht werden kann. Dadurch kann eine kompakte und fertigungsfreundliche Anordnung realisiert werden. Bei dem Pyroswitch, auch Pyroschalter, wird eine pyrotechnische Treibladung gezündet, und durch die dabei freigesetzte Energie das Koppelelement zwischen den bereits beschriebenen Positionen bewegt.

Dabei kann der Verstellantrieb an der Trägerplatte angreifen, so dass die Kraft beim Crash in Längsrichtung von dem Innenmantelrohr über die Energieabsorptionseinrichtung - für ein eingekoppeltes Energieabsorptionselement über das Koppelstück oder dem Mitnehmer - die Trägerplatte, und den Verstellantrieb auf die Außenmanteleinheit geleitet wird.

Zumindest ein Energieabsorptionselement kann als U-förmiges Biegeelement ausgebildet sein, das zwei über eine Umbiegung miteinander verbundene Schenkel aufweist, wobei der eine Schenkel am Eingriffsteil oder am Verbindungsteil festlegbar ist und der andere Schenkel an dem inneren Mantelrohr in Längsrichtung abstützbar ist. Es ist an sich bekannt, ein Energieabsorptionselement als Biegedraht oder Biegestreifen auszubilden, der durch eine Umbiegung von bevorzugt 180° U-förmig geformt ist, wobei sich die beiden einander gegenüberliegenden U-Schenkel im Wesentlichen parallel zur Längsrichtung erstrecken, wobei unter "im Wesentlichen parallel" eine Abweichung mit einem Raumwinkel von ±10° verstanden wird. Das Ende des einen Schenkels ist mit dem Innenmantelrohr bezüglich einer Bewegung in Längsrichtung verbunden, beispielsweise indem es sich im Crashfall in Längsrichtung an einem Anschlag oder Widerlager des Innenmantelrohrs abstützt. Das andere Ende ist zur Einleitung der Kraft mit dem erfindungsgemäßen schaltbaren Koppelstück oder dem dauerhaften Mitnehmer verbunden, von dem besagtes Ende im Crashfall in Längsrichtung mitgenommen wird. Bei einer relativen Längsverschiebung der beiden Enden im Crashfall wandert die Durchbiegung in Längsrichtung über die Längserstreckung des Biegeelements, wobei durch Verformungsarbeit kinetische Energie umgesetzt bzw. absorbiert wird.

Es können zwei oder mehrere identisch oder im Wesentlichen identisch ausgebildete Energieabsorptionselemente eingesetzt werden, beispielsweise baugleiche U-förmige Biegeelemente. Die Biegeelemente können bei unterschiedlichem Energieabsorptionsvermögen gleiche Außenabmessungen aufweisen. Dadurch wird eine Austauschbarkeit realisiert, so dass durch Kombination unterschiedlicher Biegeelemente mir geringem Aufwand angepasste, schaltbare Energieabsorptionscharakteristiken erzeugt werden können.

Die beiden U-förmig ausgebildeten Biegeelemente können mit ihrer Umbiegung in Richtung der Fahrzeugfront angeordnet sein. Es ist aber auch denkbar und möglich, einen oder beide der U-förmig ausgebildeten Biegeelemente derart anzuordnen, dass die Umbiegungen in unterschiedliche Richtungen oder in Richtung entgegen der Fahrzeugfront ausgerichtet sind.

Das Koppelstück und/oder der Mitnehmer können jeweils ein im Wesentlichen bolzenförmiges Mitnehmerelement aufweisen, welches mit einem Schenkel des jeweiligen Biegeelements in Eingriff steht. Das Biegeelement kann einen quer zur Längsrichtung umgebogenen Abschnitt aufweisen, in den das Mitnehmerelement formschlüssig eingreift und im Crashfall eine sichere Mitnahme in Längsrichtung gewährleistet.

Die Biegeelemente können so angeordnet sein, dass zumindest zwei Biegeelemente mit ihren Schenkeln in Längsrichtung gleich ausgerichtet sind. Dabei weisen die U-Schenkel von der Umbiegung aus gesehen parallel zur Längsachse in die gleiche Längsrichtung. Dadurch werden die Biegeelemente im Crashfall gleichartig verformt, was vorteilhaft ist im Hinblick auf reproduzierbare Energieabsorptionseigenschaften.

Zumindest zwei Energieabsorptionselemente können in Längsrichtung aufeinander folgend angeordnet sein. Bevorzugt sind die Biegeelemente separat ausgebildet und in Längsrichtung mit Abstand zueinander angeordnet. Dadurch kann eine flache, in radialer Richtung wenig Bauraum beanspruchende Bauweise realisiert werden. Damit, dass die Biegeelemente separat ausgebildet sind, ist gemeint, dass die mindestens zwei Biegeelemente nicht direkt miteinander verbunden sind, sondern jeweils für sich nur mit dem einen Schenkel mit dem Innenmantelrohr und mit dem anderen Schenkel mit dem Koppelstück oder dem Mitnehmer verbunden sind. Dadurch, dass die Biegeelemente in Längsrichtung Abstand voneinander haben, ist zusätzlich sichergestellt, dass im Crashfall keine gegenseitige Beeinträchtigung bei der energieabsorbierenden Verformung auftreten kann. Bevorzugt besteht ein positiver Abstand in Längsrichtung zwischen der Umbiegung des einen Biegeelements und den Enden der Schenkel des anderen Biegeelements.

Es kann vorteilhaft sein, dass die Energieabsorptionselemente in einem gemeinsamen Gehäuse angeordnet sind. Das Gehäuse bildet einen Teil der erfindungsgemäßen Energieabsorptionseinrichtung, der die Energieabsorptionselemente zumindest teilweise umschließt und gegen Störeinflüsse schützt. Weiterhin können in oder an dem Gehäuse Befestigungselemente für die Energieabsorptionselemente, Längsführungen für die Mitnehmerelemente und dergleichen ausgebildet werden. Dadurch sind die Energieabsorptionselemente geschützt untergebracht. Außerdem kann eine kompakte Bauweise in einem kleinen Bauraum realisiert werden.

In einer vorteilhaften Weiterbildung kann es vorgesehen sein, dass die Energieabsorptionseinrichtung zwischen dem Innenmantelrohr und dem Verstellantrieb angeordnet ist. Somit erfolgt im Crashfall die Relativbewegung zwischen dem Innenmantelrohr und dem Verstellantrieb, der an der Außenmanteleinheit festgelegt ist. Bevorzugt weist der Verstellantrieb ein Tragelement auf, wobei die Energieabsorptionseinrichtung mit dem Tragelement und dem Innenmantelrohr gekoppelt ist.

In einer vorteilhaften Weiterbildung kann es alternativ oder zusätzlich vorgesehen sein, dass die Energieabsorptionseinrichtung zwischen der Außenmanteleinheit und dem Verstellantrieb angeordnet ist. Somit erfolgt im Crashfall bei der alternativen Anordnung die Relativbewegung zwischen der Außenmanteleinheit und dem Verstellantrieb, der an dem Innenmantelrohr festgelegt ist. Im Fall der zusätzlichen Anordnung erfolgt zwischen dem Innenmantelrohr, der Außenmanteleinheit und dem Verstellantrieb jeweils eine Relativbewegung.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer perspektivischen Darstellung,
- Figur 2: die Lenksäule gemäß Figur 1 in einer weiteren perspektivischen Darstellung,
- Figur 3: eine Detailansicht der Lenksäule gemäß Figur 1 in perspektivischer Darstellung,
- Figur 4: eine Detailansicht der Lenksäule gemäß Figur 1 in auseinander gezogener Darstellung,
- Figur 5: eine Detailansicht einer erfindungsgemäßen Energieabsorptionseinrichtung im normalen Betriebszustand,
- Figur 6: eine Seitenansicht der Energieabsorptionselemente der Energieabsorptionseinrichtung gemäß Figur 5,
- Figur 7: eine Energieabsorptionsvorrichtung gemäß Figur 5 im Zustand nach einem Crash mit eingekoppelten Energieabsorptionselementen;
- Figur 8: die Energieabsorptionseinrichtung gemäß Figur 7 in einer Darstellung analog zu Figur 6,
- Figur 9: eine Energieabsorptionsvorrichtung gemäß Figur 5 im Zustand nach einem Crash mit einem ausgekoppelten Energieabsorptionselement,
- Figur 10: die Energieabsorptionseinrichtung gemäß Figur 9 in einer Darstellung analog zu Figur 6,
- Figur 11: eine Detailansicht eines erfindungsgemäßen Koppelstücks,
- Figur 12: eine Detailansicht eines Innenmantelrohrs in einer alternativen Ausführungsform,
- Figur 13: eine weitere Detailansicht des Innenmantelrohrs der Figur 12,
- Figur 14: eine Detailansicht eines Innenmantelrohrs in einer alternativen Ausführungsform,
- Figur 15: eine Detailansicht eines Innenmantelrohrs in einer weiteren alternativen Ausführungsform,
- Figur 16: eine schematisierte Schnittdarstellung des doppelwandigen Abschnitts des Schlosstopfes.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

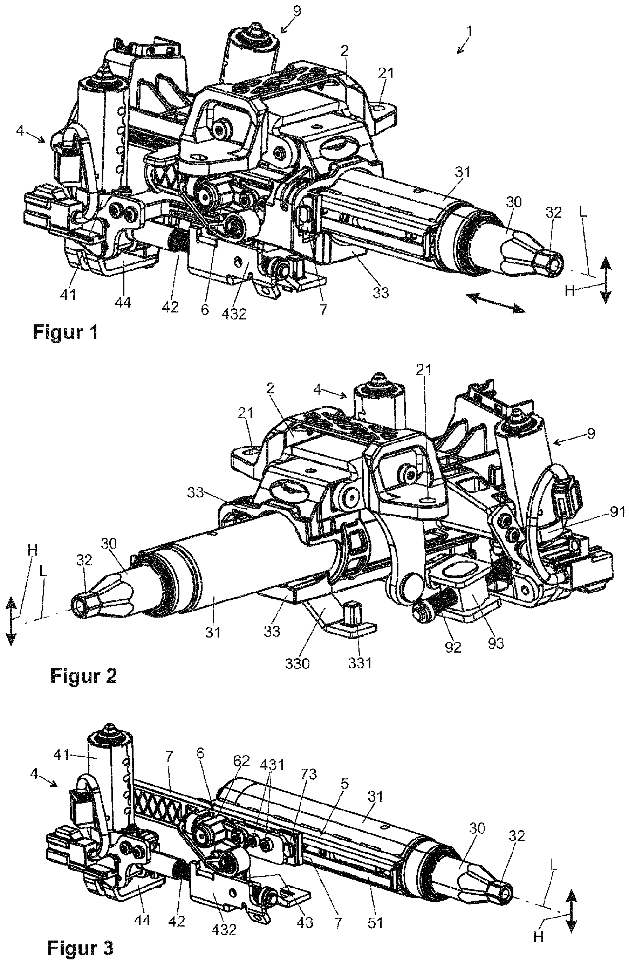

In Figuren 1 und 2 ist eine erfindungsgemäße Lenksäule 1 schematisch in perspektivischer Ansicht schräg von hinten (bezogen auf die Fahrtrichtung eines nicht gezeigten Kraftfahrzeugs) dargestellt.

Die Lenksäule 1 kann an der Karosserie eines nicht dargestellten Kraftfahrzeugs mittels einer Konsole 2 befestigt werden, die der Übersichtlichkeit halber in der Ansicht von Figur 2 weggelassen ist. Die Konsole 2 umfasst zur Verbindung mit der Karosserie Befestigungsmittel 21.

Eine Lenkspindel 30 ist in einem Innenmantelrohr 31, auch als inneres Mantelrohr 31 bezeichnet, ist um ihre Längsachse L, die sich in Längsrichtung nach vorn erstreckt, drehbar gelagert. Hinten an der Lenkspindel 30 ist ein Befestigungsabschnitt 32 zur Befestigung eines nicht dargestellten Lenkrads ausgebildet. Das Innenmantelrohr 31 ist in einer Außenmanteleinheit 33, auch als äußere Manteleinheit 33 oder kurz Manteleinheit 33, in Längsrichtung teleskopartig verschiebbar gehaltert.

Ein motorischer Verstellantrieb 4 umfasst eine elektrische Antriebseinheit 41 mit einem Elektromotor, die sich an der Außenmanteleinheit 33 in Längsrichtung mittels eines bügelartigen Abstützbauteils 44 abstützt und von der eine sich im Wesentlichen in Längsrichtung erstreckende Gewindespindel (Spindel) 42 drehend antreibbar ist, die in eine bezüglich dazu drehfest angeordnete Spindelmutter 43 eingeschraubt ist, die sich an dem Innenmantelrohr 31 in Längsrichtung über ein Trägerelement 432 abstützt. Dadurch wird ein Rotationsspindeltrieb realisiert, bei dem durch drehenden Antrieb der Gewindespindel 42 der Abstand in Längsrichtung zwischen Antriebseinheit 41 und Spindelmutter 43 verstellbar ist. Durch Aktivierung der Antriebseinheit 41 kann das Innenmantelrohr 31 relativ zur Außenmanteleinheit 33 zur Längsverstellung der Lenksäule 1 teleskopartig ein- oder ausgefahren werden, wie mit einem Doppelpfeil angedeutet ist.

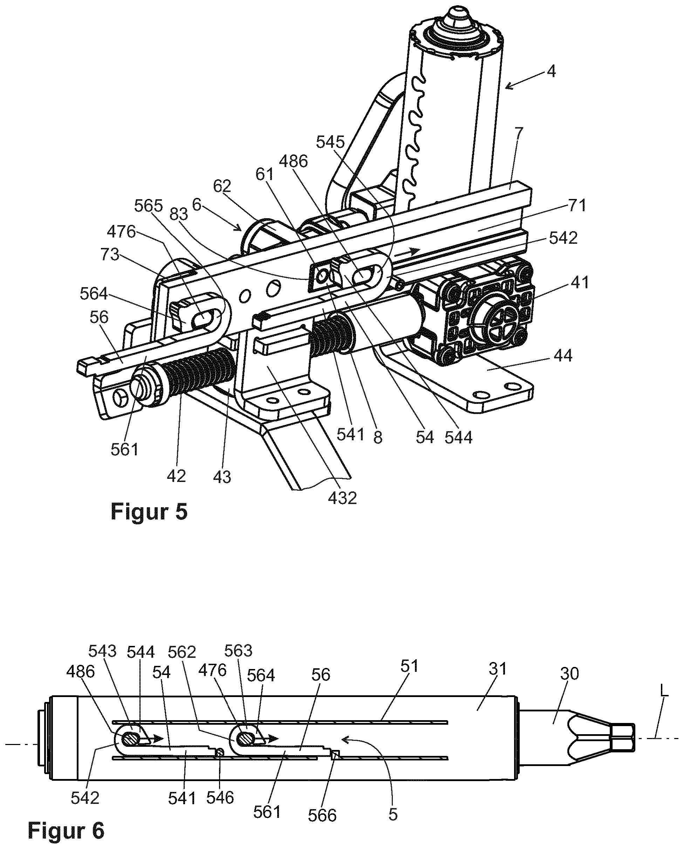

Zwischen der Außenmanteleinheit 33 und dem Innenmantelrohr 31 ist eine Energieabsorptionseinrichtung 5 angeordnet, die im Folgenden näher erläutert wird. Diese ist in Figur 3 erkennbar, in der in derselben Perspektive wie in Figur 1 die Außenmanteleinheit 33 weggelassen ist. Figur 6 zeigt eine Explosionsdarstellung der Anordnung aus Figur 3.

Die Energieabsorptionsvorrichtung 5 umfasst ein Gehäuse 51, auch als Halteprofil 51 bezeichnet, in Form einer C-förmigen Schiene mit im Wesentlichen rechteckigem Querschnitt auf, die fest mit dem Innenmantelrohr 31 verbunden ist und sich in Längsrichtung erstreckt, wobei der offene Querschnitt gegen die Außenseite des Innenmantelrohrs 31 gerichtet ist. Mittels Formschlusselementen 510, die in korrespondierende Aufnahmeöffnungen 310 in dem inneren Mantelrohr 31 eingreifen, ist das Gehäuse 51 fest mit dem Mantelrohr 31 verbunden, beispielsweise mittels Laserschweißen. Auf seiner radial nach außen gerichteten Außenseite weist das als Halteprofil ausgebildete Gehäuse 51 einen sich parallel zur Längsachse L erstreckenden Schlitz 52 auf.

In dem Gehäuse 51 sind ein erstes Energieabsorptionselement 54 und ein zweites Energieabsorptionselement 56 mit Abstand in Längsrichtung angeordnet.

Die Außenmanteleinheit 33 umfasst einen Bügel 330, wobei dieser Bügel 330 ein freies Ende aufweist, in dem eine Ausnehmung ausgebildet ist, in der kraftschlüssig ein Einsatzstück 331 unverdrehbar aufgenommen ist. Das Einsatzstück 331 umfasst eine Innengewindebohrung, wobei diese als Sacklochbohrung ausgebildet ist und die Öffnung auf der der Außenmanteleinheit 33 abgewandten Seite des Einsatzstückes 331 aufweist. Eine nicht dargestellte Verkleidung der Lenksäule, beispielsweise eine Unterschale aus Kunststoff, kann somit einfach an der Lenksäule fixiert werden, in dem eine Schraube in die Innengewindebohrung eingeschraubt wird und somit die Verkleidung an der Lenksäule fixiert. Das Einsatzstück 331 weist einen außenliegenden Vierkantkonus auf, der in die Ausnehmung des Bügels 330 eingepresst ist. Der Winkel des Konus ist bevorzugt so gewählt, dass zwischen dem Einsatzstück 331 und dem Bügel 330 Selbsthemmung vorherrscht.

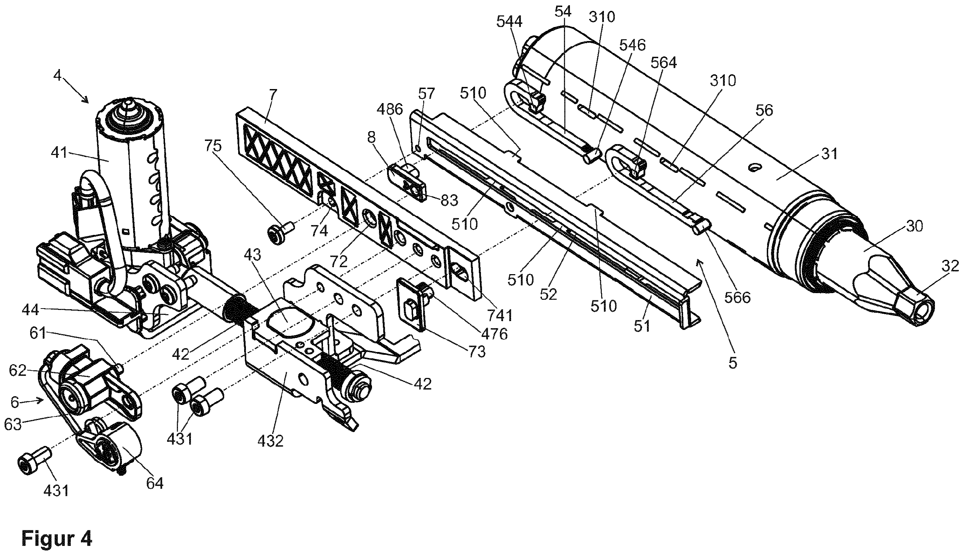

In den Figuren 4 bis 10 sind die im gezeigten Beispiel gleich geformten und hinsichtlich ihrer grundsätzlichen Funktion identischen Energieabsorptionselemente 54 und 56 in teilweise unterschiedlichen Ansichten und Betriebszuständen dargestellt. Die Energieabsorptionselemente 54 und 56 sind jeweils als U-förmiger Biegedraht bzw. Biegestreifen gestaltet, mit einem ersten Schenkel 541 bzw. 561, der über eine Umbiegung 542 bzw. 562 von im Wesentlichen 180° mit einem zweiten Schenkel 543 bzw. 563 verbunden ist. Am Ende des zweiten Schenkels 543 bzw. 563 ist jeweils ein Mitnehmerhaken 544 bzw. 564 durch eine Umbiegung gegen den ersten Schenkel 541 bzw. 561 ausgebildet. Somit wird durch die Schenkel 541, 543, die Umbiegung 542 und den Mitnehmerhaken 544, bzw. durch die Schenkel 561, 563, die Umbiegung 562 und den Mitnehmerhaken 564 jeweils eine Eingriffsöffnung 545 bzw. 565 eines Energieabsorptionselements 54 bzw.56 geformt. Die Energieabsorptionselemente 54 und 56 können als Stanzteile ausgebildet sein, so dass eine kostengünstige Herstellung gewährleistet ist.

Mit ihrem ersten Schenkel 541 bzw. 561 stützen sich die Energieabsorptionselemente 54 und 56 entgegen der Längsrichtung (Pfeil in Figur 6) gegen nach innen in den Querschnitt des Gehäuses 51 vorspringende Widerlager 546 bzw. 566 ab, welche jeweils einen Anschlag in Längsrichtung bilden.

Eine Koppelvorrichtung 6 umfasst ein stift- oder bolzenförmiges Koppelelement 61, welches an einem pyroelektrischen Aktuator 62, kurz Pyroswitch 62 genannt, angebracht ist, beispielsweise mittels Befestigungselementen 431 wie Schrauben oder dergleichen. Bei elektrischer Auslösung bzw. Betätigung des Aktuators 62 im Crashfall wird eine pyrotechnische Treibladung gezündet, durch die das Koppelelement 61 in seiner Achsrichtung, quer zur Längsrichtung der Längsachse L, Richtung zum Aktuator 62 bewegt wird, in Figur 4 mit dem Pfeil angedeutet. Der Aktuator 62 ist über eine elektrische Leitung 63 in Form eines Kabels mit einem Stecker 64 elektrisch verbunden. Der Stecker 64 ist mit einem nicht dargestellten zweiten Stecker verbindbar, wobei der zweite Stecker mit dem Bordnetz des Fahrzeugs verbunden ist. Die Spindelmutter 43 ist in Längsrichtung fest in einem Tragelement 432 gehalten, wobei das Tragelement 432 mittels Befestigungselement 431 mit einer Trägerplatte 7 verbunden, und befindet sich, von dem Innenmantelrohr 31 aus gesehen, auf der Außenseite.

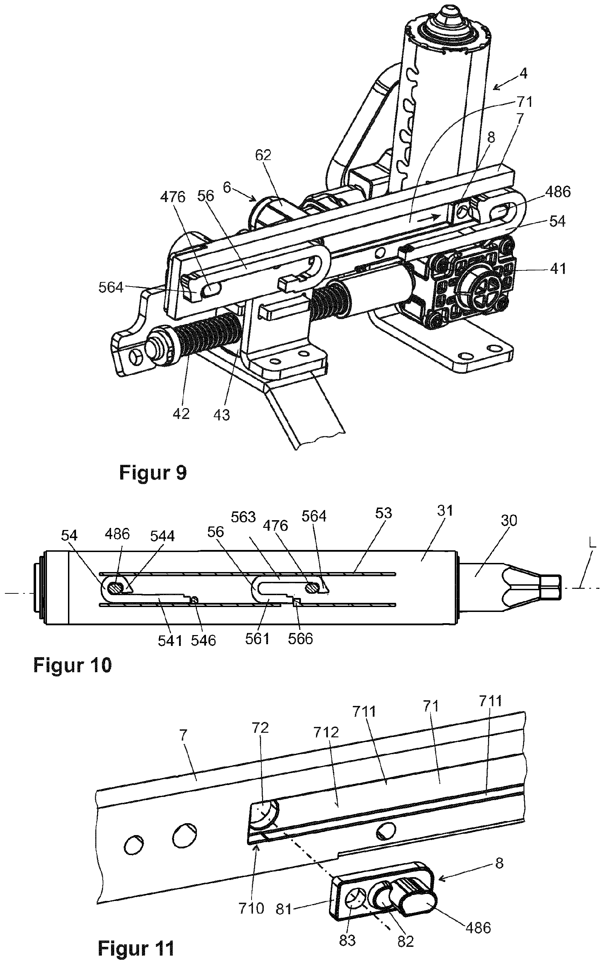

Auf ihrer Innenseite, die im montierten Zustand von außen an dem Gehäuse 51 anliegt, weist die Trägerplatte 7 eine Führungseinrichtung in Form einer Führungsnut 71 auf, wie in Figur 11 erkennbar ist. In der Führungsnut 71 ist ein erfindungsgemäßes Koppelstück 8 in Längsrichtung verschiebbar aufgenommen, wie in Figur 11 mit dem Pfeil angedeutet.

Das Koppelstück 8 weist einen Führungskörper 81 auf, der in der Führungsnut 71 in Längsrichtung entlanggleiten kann. Auf seiner dem Innenmantelrohr 31 zugewandten Innenseite ist an dem Koppelstück 8 ein Mitnehmerelement 486 ausgebildet, welches sich in Querrichtung durch den Schlitz 52 des Gehäuses 51 hindurch erstreckt und in jedem Betriebszustand der Energieabsorptionseinrichtung 5 hinter den Mitnehmerhaken 544 des ersten Energieabsorptionselements 54 eingreift, wie in Figuren 5, 6, 7, 8, 9 und 10 dargestellt. Dabei kann ein Führungsstück 82 ausgebildet sein, um in dem Schlitz 52 entlanggleiten zu können.

Die Führungsnut 71 weist zwei sich parallel zueinander erstreckende Randabschnitte 711 und einen Nutgrund 712 auf, wobei die Randabschnitte 711 die Breite der Führungsnut 71 festlegen. Die Führungsnut 71 weist einen Abschnitt 710 mit reduzierter Nutbreite auf, der an dem geschlossenen Ende der Führungsnut 71 ausgebildet ist. Zur Realisierung des Abschnitts 710 mit reduzierter Nutbreite ragt ein Vorsprung ausgehend vom Randabschnitt 711 in die Führungsnut 71 hinein. Der Führungskörper 81 des Koppelstücks 8 weist eine Breite auf, die größer ist als die Nutbreite in dem Abschnitt 710 mit reduzierter Nutbreite, wobei die Breite des Führungskörpers 81 des Koppelstücks 8 geringer ist als die Nutbreite der Führungsnut ausserhalb des Abschnitts 710 mit reduzierter Nutbreite. Das Koppelstück 8 ist in diesem Abschnitt 710 mit der reduzierten Nutbreite kraftschlüssig in der Führungsnut 71 eingesetzt, wobei im Crashfall bei ausgekoppeltem Energieabsorptionselement 54 das Koppelstück 8 unter Überwindung einer vorbestimmten Lösekraft aus dem Abschnitt 710 der Führungsnut 71 mit reduzierter Nutbreite herausbewegt wird und dann in der Führungsnut 71 unter Spiel zwischen den Randabschnitten 711 entlanggleiten kann.

Das Koppelstück 8 weist weiterhin als Kopplungsaufnahme eine quer zur Längsachse L angeordnete Koppelöffnung 83 auf, die wie dargestellt als Durchgangsöffnung ausgebildet sein kann, oder zumindest nach außen, zur Trägerplatte 7 hin offen ist.

Die Trägerplatte 7 weist eine Öffnung 72 auf, durch die sich im eingekoppelten Zustand der Koppelvorrichtung 6 das bolzenförmige Koppelement 61 hindurch in die Koppelöffnung 83 hinein erstreckt und eine bezüglich der Längsrichtung formschlüssige Verbindung mit der Trägerplatte 7 erzeugt.

Im ausgekoppelten Zustand ist das Koppelelement 61 durch Zünden des pyroelektrischen Aktuators 62 aus der Koppelöffnung 83 entfernt, so dass das Koppelstück 8 bei einem Crash sich lose in der Führungsnut 71 in Längsrichtung bewegen kann. Der Aktuator 62 weist einen Einsatzabschnitt auf, der in der Öffnung 72 der Trägerplatte 7 eingesetzt ist. Dadurch kann ein ausreichend fester Sitz des Aktuators 62 sichergestellt werden, da dieser sich mit dem Einsatzabschnitt in Längsrichtung in der Öffnung 72 abstützt. Der Führungskörper 81 des Koppelstücks 8 liegt bündig am Nutgrund 712 an. Somit wird das Koppelelement 61 im eingekoppelten Zustand wenn der Crashfall eintritt, auf Scherung belastet, was einen Vorteil gegenüber einer Ausführung, bei der das Koppelelement 61 auf Biegung belastet wird, darstellt. Dadurch kann die Betriebssicherheit erhöht werden.

Ein Mitnehmer 73 ist an der Trägerplatte 7 fixiert und weist auf seiner dem Innenmantelrohr 31 zugewandten Innenseite ein Mitnehmerelement 476 auf, welches sich in Querrichtung durch den Schlitz 52 des Gehäuses 51 hindurch erstreckt und in jedem Betriebszustand der Energieabsorptionseinrichtung 5 hinter den Mitnehmerhaken 564 des zweiten Energieabsorptionselements 56 eingreift, wie in Figuren 5, 6, 7, 8, 9 und 10 dargestellt. Der Mitnehmer 73 ist formschlüssig in einer Öffnung 741 in der Trägerplatte 7 fixiert.

Die Trägerplatte 7 ist über ein Sollbruchelement in Form eines Scherstifts 75 mit dem Gehäuse 51 verbunden. Der Scherstift 75 ist formschlüssig in einer weiteren Öffnung 74 in der Trägerplatte 7 und in einer korrespondierenden Öffnung 57 in dem Gehäuse 51 fixiert.

Das Tragelement 432, welches die Spindelmutter 43 trägt, ist mittels Befestigungselementen 431 mit der Trägerplatte 7 verbunden. Somit stützt sich die Trägerplatte 7 in Längsrichtung über den Verstellantrieb 4 an der Außenmanteleinheit 33 ab, wobei der Verstellantrieb 4 mittels des bügelförmigen Abstützbauteils 44 an der Außenmanteleinheit 33 festgelegt ist.

Im eingekoppelten Zustand, der in normalem Betriebszustand vor einem Crash in Figur 5 und 6 dargestellt ist, greift das Koppelelement 61 der Koppelvorrichtung 6 in die Koppelöffung 83 ein und bewirkt dadurch eine formschlüssige Verriegelung des Koppelstücks 8 mit der Trägerplatte 7 in Längsrichtung. Dabei ist das erste Energieabsorptionselement 54 durch das Mitnehmerelement 486 des Koppelstücks 8 und das zweite Energieabsorptionselement 56 durch das Mitnehmerelement 476 des Mitnehmers 73 mit der Trägerplatte 7 verbunden.

Im Crashfall bricht durch die auftretende hohe Kraftspitze der Scherstift 75 und ermöglicht, dass das Innenmantelrohr 33 teleskopierend in die Außenmanteleinheit 33 in Längsrichtung nach vorn eingeschoben wird. Dabei bewegt sich das Innenmantelrohr 31 relativ zur Trägerplatte 7, und - in eingekoppeltem Zustand - den beiden Mitnehmerelementen 486 und 476, wie in Figur 6 mit den Pfeilen angedeutet.

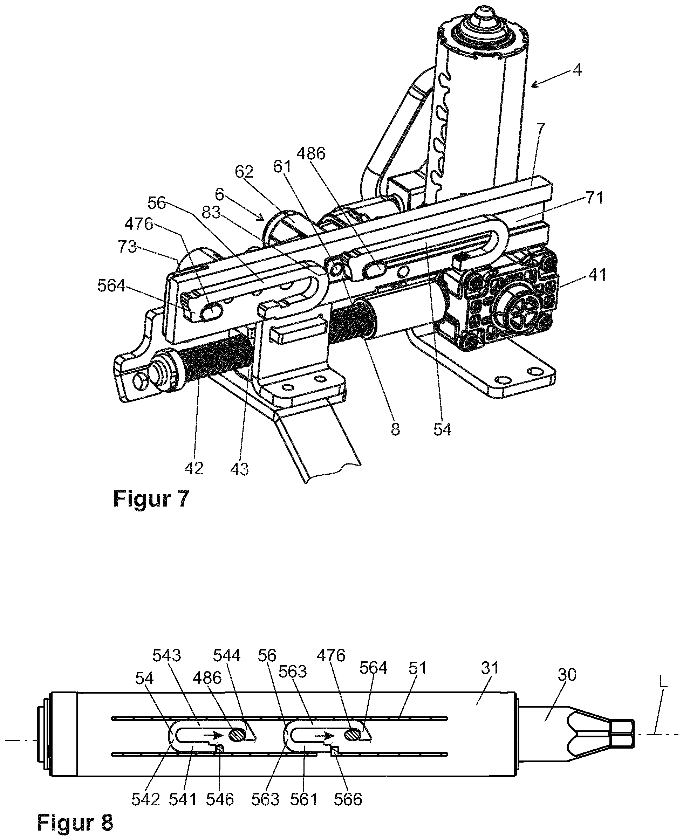

Dadurch werden - wie in dem Endzustand nach einem Crash - beide Energieabsorptionselemente 54 und 56 umgebogen und plastisch verformt, wie in Figuren 7 und 8 gezeigt. In diesem Fall, der als "High-Load-Crash" bezeichnet wird, wird die größtmögliche kinetische Energie absorbiert.

Falls nur eine geringere Energieabsorption erforderlich ist, beispielsweise bei einem geringen Fahrergewicht oder bei einem Crash mit niedriger Geschwindigkeit, wird der Pyroswitch 62 aktiviert, so dass das Koppelelement 61 aus der Koppelöffnung 83 herausgezogen wird, und eine relative Bewegung des Koppelstücks 8 freigegeben wird. In diesem ausgekoppelten Zustand wird nur das zweite, über den Mitnehmer 73 dauerhaft mit der Trägerplatte 7 verbundene Energieabsorptionselement 56 verformt. Dieser ausgekoppelte Zustand nach einem Crash ist in den Figuren 9 und 10 dargestellt. In Figur 9 ist erkennbar, wie das Koppelstück 8 von dem unverformten Energieabsorptionselement 54 mitgenommen in der Führungsnut 71 in Längsrichtung geführt entlangbewegt ist.

Beim Auskoppeln durch Herausziehen des Koppelements 61 aus der Koppelöffnung 83 wurden die auftretenden Querkräfte durch das zwischengeschaltete Koppelstück 8 von dem ersten Energieabsorptionselement 54 abgehalten. Im Crashfall wird das unverformt gebliebene, ausgeschaltete Energieabsorptionselement 54 sicher durch das Koppelstück 8 an der Trägerplatte 7 geführt, so dass keine schädlichen Verformungen auftreten können.

Ein zweiter motorischer Verstellantrieb 9 ist ebenfalls als Rotationsspindeltrieb ausgebildet mit einer motorischen Antriebseinheit 91, und einer davon drehend antreibbaren Gewindespindel 92, die in eine Spindelmutter 93 eingeschraubt ist. Der Verstellantrieb 9 stützt sich zwischen der Konsole 2 und der Außenmanteleinheit 33 ab, und ermöglicht eine motorische Verstellung der Lenkspindel 30 in Höhenrichtung H.

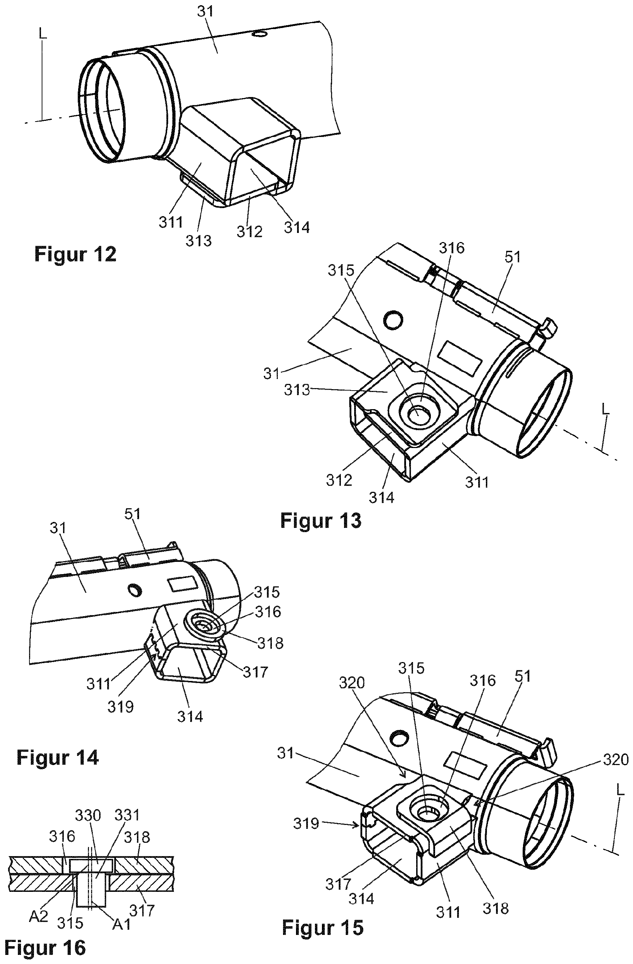

In den Figuren 12 bis 15 ist jeweils eine perspektivische Detailansicht eines Innenmantelrohrs 31 in unterschiedliche Ausführungsformen dargestellt, wobei das Innenmantelrohr 31 der Figuren 1 bis 4, 6, 8 und 10 durch ein Innenmantelrohr 31 der Figuren 12 bis 15 austauschbar ist. Der Unterschied des Innenmantelrohrs 31 aus den Figuren 1 bis 4, 6, 8 und 10 zu den Ausführungen der Figuren 12 bis 15 besteht darin, dass die Innenmantelrohre 31 einen Schlosstopf 311 aufweisen. Ein solcher Schlosstopf 311 ist eine Koppelaufnahmeeinrichtung zur Kopplung des Innenmantelrohrs 31 mit einem Lenkradschloss. Ein solches Lenkradschloss ist beispielsweise aus der DE 10 2013 112 124 A1 bekannt, wobei das Lenkradschloss einen Sperrbolzen aufweist, der mit der Lenkspindel 30 in Eingriff bringbar ist und im Eingriffszustand die Rotation der Lenkspindel 30 um die Längsachse L blockiert oder zumindest stark einschränkt. Der Schlosstopf 311 ist in den unterschiedlichen Ausführungsformen der Figuren 12 bis 15 jeweils auf der gegenüberliegenden Seite des Gehäuses 51 angebracht. Der Schlosstopf 311 ist als Hohlprofil, bevorzugt als vierkantiges Hohlprofil, ausgebildet und weist eine Aufnahmeöffnung 314 auf, in die ein Abschnitt des nicht dargestellten Lenkradschlosses eingeführt wird. In diesem Abschnitt des Lenkradschlosses ist der Sperrbolzen aufgenommen und verschiebbar geführt.

Figur 12 bis 15 zeigen ein Innenmantelrohr 31 für eine Lenksäule eines Kraftfahrzeugs zur drehbaren Aufnahme einer Lenkspindel 30, wobei das Innenmantelrohr 31 einen Schlosstopf 311 umfasst, der eine Aufnahmeöffnung 314 aufweist, in die ein Abschnitt eines Lenkradschlosses einführbar ist, wobei der Innenmantel 31 eine Öffnung aufweist, die mit der Aufnahmeöffnung 314 korrespondiert, wobei der Schlosstopf 311 einen doppelwandigen Abschnitt 312, 313, 317, 318 aufweist, wobei der doppelwandige Abschnitt aus einer ersten Wand 312, 317 und einer zweiten Wand 313, 318 gebildet ist, wobei die erste Wand 312, 317 eine erste Öffnung 315 und die zweite Wand 313, 318 eine zweite Öffnung 316 aufweist, wobei die erste Öffnung 315 und die zweite Öffnung 316 sich zumindes teilweise überdecken, wobei der Mittelpunkt der ersten Öffnung 315 gegenüber dem Mittelpunkt der zweiten Öffnung 316 versetzt ist. Somit sind die Öffnungen 315, 316 nicht konzentrisch bzw. koaxial zueinander.

Die Öffnungen 315, 316 im doppelwandigen Abschnitt des Schlosstopfes 311 bilden eine Stufenbohrung zur Aufnahme eines Befestigungselementes, bevorzugt einer Abreissschraube, die zur Befestigung des Lenkradschlosses am Innenmantelrohr 31 dient. Eine solche Abreißschraube umfasst einen Schaftabschnitt, der durch die Öffnung 315 hindurchragt und einen Kopf, der in der zweiten Öffnung 316 aufgenommen ist. In dem Kopf 330 ist ein Formschlusselement angeordnet, welches auf der dem Schaft 331 abgewandten Seite des Kopfes angerodnet ist. Dieses Formschlusselement ist mit einem Schraubwerkzeug koppelbar. Nach dem Einschrauben der Abreißschraube wird das Formschlusselement vom Kopf 330 abgetrennt. Dank der Versetzung der Mittelpunkte der Öffnungen 315, 316 zueinander, ist es nicht ohne weiteres möglich, ein Werkzeug auf den Kopf 330 aufzusetzen und die Abreisschraube zu entfernen und somit das Lenkradschloss aus dem Schlosstopf 311 zu entfernen, da der Kopf an einer Stelle so einen geringen Abstand zu der zweiten Wand 313, 318 aufweist, dass dieser das Aufsetzen eines Werkzeugs nicht ermöglicht. Dies lässt sich besonders anschaulich der Figur 16 entnehmen. Die Figur 16 zeigt eine schematisierte Schnittdarstellung des doppelwandigen Abschnitts des Schlosstopfes. Der Abstand des Kopfes 330 zur zweiten Wand 318 auf der rechten Seite geringer ist als auf der linken Seite. Die Achse A1 der ersten Öffnung 315 ist gegenüber der Achse A2 der zweiten Öffnung 316 versetzt angeordnet, diese weisen somit einen Abstand zueinander auf. Die Achsen A1, A2 sind parallel zueinander angeordnet. Die zweite Öffnung 316 weist bevorzugt einen größeren Durchmesser als die erste Öffnung 315 auf.

In der Ausführungsform der Figuren 12 und 13 ist der Schlosstopf aus einem einzigen Stück umgeformten Metallblech gebildet, wobei das Metallblech einen ersten und zweiten Abschnitt aufweist, die sich überlappen und somit in diesem überlappenden Abschnitt die erste Wand 312 und die zweite Wand 313 bereitstellen. Die erste und zweite Wand 312, 313 sind miteinander verschweißt. Der Schlosstopf 311 ist mit dem Innenmantelrohr 31 ebenfalls verschweißt.

In der Ausführungsform der Figur 14 ist die zweite Wand 318 durch einen Ring gebildet, der auf dem Schlosstopf 311 fixiert ist. Der Ring weist die zweite Öffnung 316 auf. Der Schlosstopf 311 ist durch ein Metallblech gebildet, welches gebogen wurde und dessen Enden mittels einer formschlüssigen schwalbenschwanzartigen Verzargung 319 miteinander verbunden wurden und somit die Aufnahmeöffnung 314 bilden. Die Verzargung 319 kann mittels einer Schweißoperation zusätzlich verstärkt werden. Alternativ zu einer Verzarkung 319 kann auch ein stumpfer Stoß, wobei die Enden miteinander verschweißt sind, zum Einsatz kommen.

In der Ausführungsform der Figur 15 ist die zweite Wand 318 durch einen auf den Schlosstopf 311 fixierten Blechstreifen gebildet, wobei der Blechstreifen die zur ersten Öffnung 315 versetzte Öffnung 316 aufweist. Der Schlosstopf 311 weist an seinen Biegekanten Freistellungen 320 auf, somit ist eine verbesserte Verbindung zwischen Schlosstopf 311 und dem Innenmantelrohr 31 durch einen bündigen Stoß möglich. Diese Freistellung 320 kann auch bei den anderen Ausführungsformen der Figuren 12 bis 14 zum Einsatz kommen.

## Patentansprüche

1. Lenksäule (1) für ein Kraftfahrzeug, umfassend
ein Innenmantelrohr (31) in dem eine Lenkspindel (30) um ihre Längsachse (L) drehbar gelagert ist, eine Außenmanteleinheit (33), in der das Innenmantelrohr (31) gehaltert ist, und die mit der Karosserie eines Kraftfahrzeugs direkt oder indirekt verbindbar ist,
wobei zwischen der Außenmanteleinheit (33) und dem Innenmantelrohr (31) ein motorischer Verstellantrieb (4) angeordnet ist, durch den die Außenmanteleinheit (33) und das Innenmantelrohr (31) relativ zueinander in Richtung der Längsachse (L) verschiebbar sind,
wobei das Innenmantelrohr (31) und die Außenmanteleinheit (33) über eine Energieabsorptionseinrichtung (5) gekoppelt sind, die zumindest zwei Energieabsorptionselemente (54, 56) und eine Koppelvorrichtung (6) aufweist,
wobei über die Koppelvorrichtung (6) zumindest ein erstes Energieabsorptionselement (54) zwischen dem Innenmantelrohr (31) und der Außenmanteleinheit (33) einkoppelbar oder auskoppelbar ist, welches in eingekoppeltem Zustand bei einer relativen Verschiebung in Längsrichtung von Innenmantelrohr (31) und Außenmanteleinheit (33) plastisch verformbar ist,
und die Koppelvorrichtung (6) ein Koppelelement (61) aufweist, welches zwischen dem ausgekoppelten und dem eingekoppelten Zustand bewegbar ist, wobei das Koppelelement (61) in Wirkeingriff bringbar ist mit einem Koppelstück (8) welches mit dem ersten Energieabsorptionselement (54) verbunden ist, wobei der Verstellantrieb (4) zwischen der Energieabsorptionseinrichtung (5) und der Außenmanteleinheit (33) angeordnet ist, **dadurch gekennzeichnet, dass** das Koppelstück (8) als von dem Energieabsorptionselement (54) separates Zwischenelement ausgeführt ist.

2. Lenksäule nach Anspruch 1, **dadurch gekennzeichnet, dass** das Koppelstück (8) ein Mitnehmerelement (486) aufweist, welches in das erste Energieabsorptionselement (54) eingreift.

3. Lenksäule nach einem der vorangehenden Ansprüche, **dadurch gekennzeichnet, dass** das Koppelstück (8) in einer Führungseinrichtung (71) in Richtung der Längsachse (L) geführt ist.

4. Lenksäule nach Anspruch 3, **dadurch gekennzeichnet, dass** das Koppelstück (8) einen Führungskörper (81) umfasst, der in einer Führungsnut (71) in Längsrichtung verschiebbar aufgenommen ist.

5. Lenksäule nach einem der vorangehenden Ansprüche, **dadurch gekennzeichnet, dass** das Koppelstück (8) eine Kopplungsaufnahme (83) aufweist, mit der das Koppelelement (61) verbindbar ist.

6. Lenksäule nach einem der vorangehenden Ansprüche, **dadurch gekennzeichnet, dass** die Energieabsorptionseinrichtung (5) ein Sollbruchelement (75) aufweist.

7. Lenksäule nach einem der vorangehenden Ansprüche, **dadurch gekennzeichnet, dass** eine Trägerplatte (7) mit der Außenmanteleinheit (33) gekoppelt ist.

8. Lenksäule nach den Ansprüchen 7 und 3, **dadurch gekennzeichnet, dass** die Trägerplatte (7) die Führungseinrichtung (71) aufweist.

9. Lenksäule nach Anspruch 7 oder 8, **dadurch gekennzeichnet, dass** an der Trägerplatte (7) der mit dem zweiten Energieabsorptionselement (56) verbundene Mitnehmer (476) festgelegt ist.

10. Lenksäule nach einem der Ansprüche 7 bis 9, **dadurch gekennzeichnet, dass** die Trägerplatte (7) über das Sollbruchelement (75) mit dem Innenmantelrohr (33) verbunden ist.

11. Lenksäule nach einem der Ansprüche 7 bis 10, **dadurch gekennzeichnet, dass** die Koppelvorrichtung (6) an der Trägerplatte (7) festgelegt ist.

12. Lenksäule nach einem der vorangehenden Ansprüche, **dadurch gekennzeichnet, dass** die Koppelvorrichtung (6) einen pyroelektrischen Aktuator (62) aufweist.

13. Lenksäule nach Anspruch 7, **dadurch gekennzeichnet, dass** der Verstellantrieb (4) an der Trägerplatte (7) angreift.

14. Lenksäule nach einem der vorangehenden Ansprüche, **dadurch gekennzeichnet, dass** zumindest ein Energieabsorptionselement (54, 56) als Biegeelement ausgebildet ist, das zwei über eine Umbiegung (542, 562) miteinander verbundene Schenkel (541, 561, 543, 563) aufweist, wobei der eine Schenkel (543, 563) an der Außenmanteleinheit (33) und der andere Schenkel (541, 561) am Innenmantelrohr (31) in Längsrichtung abstützbar ist.

## Claims

1. A steering column (1) for a motor vehicle, comprising
an inner casing tube (31) in which a steering spindle (30) is mounted rotatably about its longitudinal axis (L),
an outer casing unit (33) in which the inner casing tube (31) is retained, and which can be directly or indirectly connected to the body of a motor vehicle,
wherein a motorized adjustment drive (4) is arranged between the outer casing unit (33) and the inner casing tube (31), by means of which the outer casing unit (33) and the inner casing tube (31) can be displaced relative to one another in the direction of the longitudinal axis (L),
wherein the inner casing tube (31) and the outer casing unit (33) are coupled via an energy absorption device (5) which has at least two energy absorption elements (54, 56) and a coupling device (6),
wherein at least a first energy absorption element (54) can be coupled or uncoupled between the inner casing tube (31) and the outer casing unit (33) via the coupling device (6), which energy absorption element can be plastically deformed in the coupled state with a relative displacement in the longitudinal direction of the inner casing tube (31) and the outer casing unit (33),
and the coupling device (6) has a coupling element (61) which is movable between the uncoupled and the coupled state.
wherein the coupling element (61) can be brought into operative engagement with a coupling piece (8) which is connected to the first energy absorption element (54), wherein the adjustment drive (4) is arranged between the energy absorption device (5) and the outer casing unit (33), **characterized in that** the coupling piece (8) is configured as intermediate element separate from the energy absorption element (54).

2. The steering column as claimed in claim 1, **characterized in that** the coupling piece (8) has a carrier element (486) which engages with the first energy absorption element (54).

3. The steering column as claimed in one of the preceding claims, **characterized in that** the coupling piece (8) is guided in a guide means (71) in the direction of the longitudinal axis (L).

4. The steering column as claimed in claim 3, **characterized in that** the coupling piece (8) comprises a guide body (81) which is received displaceably in the longitudinal direction in a guide groove (71).

5. The steering column as claimed in one of the preceding claims, **characterized in that** the coupling piece (8) has a coupling receiving means (83) to which the coupling element (61) can be connected.

6. The steering column as claimed in one of the preceding claims, **characterized in that** the energy absorption element (5) has a predetermined breaking element (75).

7. The steering column as claimed in one of the preceding claims, **characterized in that** a support plate (7) is coupled to the outer casing unit (33).

8. The steering column as claimed in claims 7 and 3, **characterized in that** the support plate (7) comprises the guide means (71).

9. The steering column as claimed in claim 7 or 8, **characterized in that** the carrier (476) connected to the second energy absorption element (56) is fixed to the support plate (7).

10. The steering column as claimed in one of claims 7 to 9, **characterized in that** the carrier plate (7) is connected to the inner casing tube (33) via the predetermined breaking element (75).

11. The steering column as claimed in one of claims 7 to 10, **characterized in that** the coupling device (6) is fixed to the support plate (7).

12. The steering column as claimed in one of the preceding claims, **characterized in that** the coupling device (6) has a pyroelectric actuator (62).

13. The steering column as claimed in claim 7, **characterized in that** the adjustment drive (4) makes contact with the support plate (7).

14. The steering column as claimed in one of the preceding claims, **characterized in that** at least one energy absorption element (54, 56) is formed as a bending element which has two legs (541, 561, 543, 563) connected to one another by a bend (542, 562), wherein the one leg (543, 563) can be fixed to the outer casing unit (33) and the other leg (541, 561) to the inner casing tube (31) in the longitudinal direction.

## Revendications

1. Colonne de direction (1) pour un véhicule automobile, comprenant
un tube d'enveloppe intérieur (31) dans lequel un arbre de direction (30) est monté rotatif autour de son axe longitudinal (L),
une unité d'enveloppe extérieure (33) dans laquelle est maintenu le tube d'enveloppe intérieur (31) et qui peut être reliée directement ou indirectement à la carrosserie d'un véhicule automobile,
dans laquelle un entraînement de réglage motorisé (4) est disposé entre l'unité d'enveloppe extérieure (33) et le tube d'enveloppe intérieur (31), entraînement au moyen duquel l'unité d'enveloppe extérieure (33) et le tube d'enveloppe intérieur (31) sont déplaçables l'un par rapport à l'autre dans la direction de l'axe longitudinal (L),
dans laquelle le tube d'enveloppe intérieur (31) et l'unité d'enveloppe extérieure (33) sont accouplés par le biais d'un dispositif d'absorption d'énergie (5) qui présente au moins deux éléments d'absorption d'énergie (54, 56) et un dispositif d'accouplement (6),
dans laquelle, par le biais du dispositif d'accouplement (6), au moins un premier élément d'absorption d'énergie (54) peut être accouplé ou désaccouplé entre le tube d'enveloppe intérieur (31) et l'unité d'enveloppe extérieure (33), lequel est déformable plastiquement à l'état accouplé en cas de déplacement relatif dans la direction longitudinale du tube d'enveloppe intérieur (31) et de l'unité d'enveloppe extérieure (33),
et le dispositif d'accouplement (6) présente un élément d'accouplement (61), lequel est mobile entre l'état désaccouplé et l'état accouplé, l'élément d'accouplement (61) pouvant être amené en prise fonctionnelle avec une pièce d'accouplement (8), laquelle est reliée au premier élément d'absorption d'énergie (54), dans laquelle l'entraînement de réglage (4) est disposé entre l'unité d'absorption d'énergie (5) et l'unité d'enveloppe extérieure (33), **caractérisée en ce que** la pièce d'accouplement (8) est réalisée sous forme d'élément intermédiaire séparé de l'élément d'absorption d'énergie (54) .

2. Colonne de direction selon la revendication 1, **caractérisée en ce que** la pièce d'accouplement (8) présente un élément d'entraînement (486), lequel vient en prise dans le premier élément d'absorption d'énergie (54) .

3. Colonne de direction selon l'une des revendications précédentes, **caractérisée en ce que** la pièce d'accouplement (8) est guidée dans un moyen de guidage (71) dans la direction de l'axe longitudinal (L).

4. Colonne de direction selon la revendication 3, **caractérisée en ce que** la pièce d'accouplement (8) comprend un corps de guidage (81) qui est reçu de manière déplaçable dans la direction longitudinale dans une rainure de guidage (71).

5. Colonne de direction selon l'une des revendications précédentes, **caractérisée en ce que** la pièce d'accouplement (8) présente un logement d'accouplement (83) auquel l'élément d'accouplement (61) peut être relié.

6. Colonne de direction selon l'une des revendications précédentes, **caractérisée en ce que** le dispositif d'absorption d'énergie (5) présente un élément destiné à la rupture (75).

7. Colonne de direction selon l'une des revendications précédentes, **caractérisée en ce qu'**une plaque de support (7) est accouplée à l'unité d'enveloppe extérieure (33).

8. Colonne de direction selon les revendications 7 et 3, **caractérisée en ce que** la plaque de support (7) présente le moyen de guidage (71).

9. Colonne de direction selon la revendication 7 ou 8, **caractérisée en ce que** l'élément d'entraînement (476) relié au deuxième élément d'absorption d'énergie (56) est fixé à la plaque de support (7).

10. Colonne de direction selon l'une des revendications 7 à 9, **caractérisée en ce que** la plaque de support (7) est reliée au tube d'enveloppe intérieur (33) par le biais de l'élément destiné à la rupture (75).

11. Colonne de direction selon l'une des revendications 7 à 10, **caractérisée en ce que** le dispositif d'accouplement (6) est fixé à la plaque de support (7).

12. Colonne de direction selon l'une des revendications précédentes, **caractérisée en ce que** le dispositif d'accouplement (6) présente un actionneur pyroélectrique (62) .

13. Colonne de direction selon la revendication 7, **caractérisée en ce que** l'entraînement de réglage (4) agit sur la plaque de support (7).

14. Colonne de direction selon l'une des revendications précédentes, **caractérisée en ce qu'**au moins un élément d'absorption d'énergie (54, 56) est réalisé sous forme d'élément de flexion, lequel présente deux branches (541, 561, 543, 563) reliées entre elles par un cintrage (542, 562), l'une des branches (543, 563) pouvant s'appuyer contre l'unité d'enveloppe extérieure (33) et l'autre branche (541, 561) pouvant s'appuyer contre le tube d'enveloppe intérieur (31) dans la direction longitudinale.
